# EUROPÄISCHE PATENTANMELDUNG

(11) **EP 1 790 420 A2**
(43) Veröffentlichungstag der Anmeldung: **30.05.2007**
(21) Anmeldenummer: 06124609.6
(22) Anmeldetag: 23.11.2006
(51) Int. Cl.: B06B 1/06

(54) **Vorrichtung zur Ermittlung und Überwachung des Füllstands eines Füllguts in einem Behälter gemäß der Laufzeitmessmethode**

(30) Priorität: 28.11.2005 DE 102005056895
(71) Anmelder: Endress + Hauser GmbH + Co. KG, 79689 Maulburg (DE)
(72) Erfinder: Eckert, Manfred, 79674 Todtnau (DE); Deserno, Rolf, 79689 Maulburg (DE)
(74) Vertreter: Andres, Angelika Maria

(57) **Zusammenfassung**

Die vorliegende Erfindung betrifft eine Vorrichtung (1) zur Ermittlung und Überwachung des Füllstands (f) eines Füllguts (5) in einem Behälter (7) gemäß der Laufzeitmessmethode mit Ultra-/Schallsignalen (S), bestehend aus einem Messumformer (2) und einer Sensoreinheit (3),wobei die Sensoreinheit (3) aus zumindest einem piezoelektrischen Wandlerelement (15), das stirnseitig von zumindest einem Abstrahlelement (17) und zumindest einem Gegenelement (12) begrenzt ist, besteht, wobei zumindest eine Befestigungsschraube (10) das Gegenelement (12), das Abstrahlelement (17) und das piezoelektrischen Wandlerelement (15) zu einem Verbundschwingsystem (21) positioniert, das in Abstrahlrichtung die Ultra-/Schallsignale (S) aussendet und/oder empfängt.

Die Erfindung beinhaltet, dass die Befestigungsschraube (10) und das Gegenelement (12) als eine Befestigungseinheit (13) ausgebildet und so ausgestaltet sind, dass auftretende Störresonanzfrequenzen der Befestigungseinheit (13) außerhalb des Frequenzbereichs der Ultra-/Schallsignale (S) liegen.

## Beschreibung

Die vorliegende Erfindung betrifft eine Vorrichtung zur Ermittlung und Überwachung des Füllstands eines Füllguts in einem Behälter gemäß der Laufzeitmessmethode mit Ultra-/Schallsignalen in einem definierten Frequenzbereich, bestehend aus einem Messumformer und einer Sensoreinheit, wobei die Sensoreinheit aus zumindest einem piezoelektrischen Wandlerelement, das stirnseitig von zumindest einem Abstrahlelement und zumindest einem Gegenelement begrenzt ist, besteht, wobei zumindest eine Befestigungsschraube das Gegenelement, das Abstrahlelement und das piezoelektrischen Wandlerelement zu einem Verbundschwingsystem positioniert, das die Ultra-/Schallsignale aussendet und/oder empfängt.

Derartige Vorrichtungen zur Ermittlung und Überwachung des Füllstands in einem Behälter werden häufig in den Messgeräten der Automations- und Prozesssteuerungstechnik eingesetzt. Von der Anmelderin werden beispielsweise Messgeräte unter dem Namen Prosonic produziert und vertrieben, welche nach dem Laufzeit-Messverfahren arbeiten und dazu dienen, einen Füllstand eines Füllguts in einem Behälter zu bestimmen und/oder zu überwachen. Bei der Laufzeitmessmethode werden beispielsweise die über einen Ultraschall-Transceiver erzeugten Ultra-/Schallsignale in den Prozessraum ausgesendet und die reflektierten Echowellen werden nach der abstandsabhängigen Laufzeit der Signale wieder von einem Sende-/Empfangselement empfangen. Aus der Zeitdifferenz zwischen dem Aussenden der Ultra-/Schallsignale und dem Empfang der reflektierten Echosignale lässt sich der Abstand des Messgerätes zu der Füllgutoberfläche ermitteln. Vorrichtungen und Verfahren zur Bestimmung des Füllstandes über die Laufzeit von Ultraschallsignalen sowie auch von anderen Messsignalen, wie z.B. Radar nutzen die physikalische Gesetzmäßigkeit aus, wonach die Laufstrecke gleich dem Produkt aus der Laufzeit und der Ausbreitungsgeschwindigkeit ist. Unter Berücksichtigung der Geometrie des Behälterinnern und des Behälters wird dann der Füllstand des Füllguts als relative oder absolute Größe ermittelt.

Die Erzeugung der Schallwellen bzw. Ultraschallwellen und das Ermitteln der reflektierten Echowellen nach einer abstandsabhängigen Laufzeit können durch separate Sendeelemente und Empfangselemente oder durch gemeinsame Sende-/Empfangselemente erfolgen. In der Praxis kommt meist nur ein einzelnes Sende-/Empfangselement - ein so genannter Ultraschall-Transceiver -, der ein Sendesignal erzeugt und zeitlich versetzt ein Reflexionssignal bzw. Echosignal empfängt, zum Einsatz. Der Ultraschall-Transceiver bildet im Allgemeinen ein Verbundschwingsystem, das aus der Literatur als Langevin-Schwinger bekannt ist. In der DE-OS 29 06 704 ist beispielsweise der Aufbau und die Funktionsweise eines solchen Schwingers beschrieben, der auch als Tonpilz-Resonator bezeichnet wird. Das Kernstück eines Tonpilz-Resonators ist ein piezoelektrisches Element, das mittels einer Befestigungsschraube zwischen einem Abstrahlelement und einem Gegenelement eingespannt wird und mit diesem zusammen das Verbundschwingsystem bildet.

Wird ein kombiniertes Sende-/Empfangselement zum Aussenden und zum Empfangen von Ultra-/Schallsignale eingesetzt, so tritt zwischen dem Aussenden und Empfangen eine bestimmte Zeitkonstante bzw. Totzeit auf, die das Verbundschwingsystem des Sende-/Empfangselement nach erfolgter Anregung und Aussendung des Sendesignals zum Ausschwingen benötigt. Erst nach einer gewissen Abklingzeit ist das Sende-/Empfangselement zum Empfangen der reflektierten Ultra-/Schallsignale bereit, da in der Zeitdauer, in der das angeregte Sende-/Empfangselement ausschwingt, die zu messenden Reflexionssignale bzw. Echos von Ihrem Amplitudenwert geringer sind als das abklingende Sendesignal.

Die Abklingzeit lässt sich durch mechanische Dämpfung des Verbundschwingsystems verkürzen. Diese mechanische Dämpfung wird beispielsweise durch einen Dämpfungsverguss, der einige Teile des Verbundschwingsystems umgibt, erreicht. Je stärker die mechanische Dämpfung durch diesen Dämpfungsverguss ist, umso schneller schwingt das Verbundschwingsystem aus. Der fehlende Messbereich der Distanz des Füllstandmessgeräts, in dem die zu empfangenen Signale von dem Abklingsignal des Verbundschwingsystems überdeckt werden, wird als Blockdistanz bezeichnet. Dies ist besonders bei Füllstandsmessgeräten mit einem kleinen Messbereich sehr wichtig, da sich hier die Größe der Blockdistanz stärker auswirkt. Eine große mechanische Dämpfung bewirkt aber nicht nur ein schnelles Ausschwingen des Verbundschwingsystems, es reduziert auch die Messempfindlichkeit.

Der mehrteiligen Aufbau des Verbundschwingsystem eines Resonators hat zur Folge, dass neben dem Gesamtsystem auch dessen Einzelteile zum Schwingen angeregt werden können, besonders wenn diese Schwingungsmoden mit Resonanzfrequenzen in der Nähe der Sensor-Arbeitsfrequenz aufweisen. Da nicht alle Elemente des Verbundschwingsystems in gleicher Art und Weise durch Dämpfungsmedien, z.B. einen Dämpfungsverguss gedämpft werden, können einzelne Elemente mit einer längeren Zeitkonstanten nachschwingen und dadurch Störsignale erzeugen.

In der Publikation - Charles Desilets et al, "Analyses and Measurements of acoustically matched, air-coupled Tonpilz Transducers", 1999 IEEE Ultrasonic symposium proceedings - ist ferner der Aufbau und die Funktionsweise der zuvor beschrieben Ausgestaltung eines Tonpilz-Resonator weiter ausgeführt. In dieser Schrift werden verschieden Betriebsmoden und Störmoden, die in einem gewöhnlichen Tonpilz-Resonators auftreten können, simuliert und analysiert. Ein Lösungsansatz zur Reduktion der Störresonanzen und zur Verbesserung des Abklingverhaltens in einem Verbundschwingsystem wird nicht explizit aufgezeigt.

Es ist die Aufgabe der Erfindung, einen Aufbau eines Ultra-/Schallwandlers aufzuzeigen, der ein verbessertes Abklingverhalten und eine Reduktion von Störresonanzen aufweist.

Diese Aufgabe wird erfindungsgemäß dadurch gelöst, dass die Befestigungsschraube und das Gegenelement als eine Befestigungseinheit ausgebildet und so ausgestaltet sind, dass auftretende Störresonanzfrequenzen der Befestigungseinheit außerhalb des Frequenzbereichs der Ultra-/Schallsignale liegen. Da die Befestigungsschraube und das Gegenelement des Tonpilz-Resonators als eine Befestigungseinheit ausgeführt sind, können sich keine die Füllstandsmessung störenden Moden ausbilden.

Eine vorteilhafte Ausführungsform der erfindungsgemäßen Lösung ist darin zu sehen, dass die Befestigungsschraube und das Gegenelement als eine einteilige Befestigungseinheit ausgestaltet sind. Der Kopf der Befestigungsschraube ist in diesem Fall als unlösbares Gegenelement bzw. Gegengewicht ausgebildet und fest mit dem Schaft der Befestigungsschraube verbunden.

Eine weitere vorteilhafte Ausführungsform der erfindungsgemäßen Lösung ist darin zu sehen, dass die Befestigungsschraube und das Gegenelement als eine zumindest zweiteilige, schwingungsmechanisch gekoppelte Befestigungseinheit ausgestaltet sind. In diesem Fall sind der Schaft der Befestigungsschraube und das Gegenelement als zumindest zweiteiliger Befestigungseinheit ausgeführt. An einer Stelle zwischen dem Schaft der Befestigungsschraube und der Nabe des Gegenelements ist einen schwingungsmechanische Kopplung ausgebildet, so dass an dieser Stelle in den einzelnen Bauteilelementen dieselbe Schwingungsmoden und Schwingungsfrequenzen erzeugt werden.

In einer besonders bevorzugten Ausführungsform der Erfindung ist vorgesehen, dass zur Erzeugung der schwingungsmechanisch gekoppelten Befestigungseinheit eine kraftschlüssige Verbindung zwischen der Befestigungsschraube und dem Gegenelement ausgestaltet ist. Ein Beispiel für eine kraftschlüssige Verbindung ist eine Presspassung. Bei einer Presspassung ist das Höchstmaß der Bohrung der Nabe im Gegenelement kleiner, im Grenzfall auch gleich groß wie das Mindestmaß des Durchmessers des Schaftes der Befestigungsschraube. Der Schaft der Befestigungsschraube wird in das Gegenelement gepresst und erzeugt somit eine reibschlüssige Verbindung der beiden Teile miteinander. Die Kraftübertragung und Schwingungsübertragung zwischen dem Schaft der Befestigungsschraube und der Nabe des Gegenelements erfolgt durch den Reibungswiderstand, der durch die Presspassung oder ein zusätzliches Spannelement, z.B. eine Passfeder, erfolgt.

Gemäß einer vorteilhaften Ausführungsform der erfindungsgemäßen Vorrichtung ist vorgesehen, dass zur Erzeugung der schwingungsmechanisch gekoppelten Befestigungseinheit eine formschlüssige Verbindung vorgesehen ist, die das Gegenelement mit der Befestigungsschraube schwingungsmechanisch fest verbindet. Formschlüssige Verbindungen entstehen durch das Ineinandergreifen von mindestens zwei Verbindungspartnern. Durch die mechanische Verbindung mit beispielsweise Zahnrädern oder Nieten können sich der Schaft der Befestigungsschraube und das Gegenelement als Verbindungspartner nicht lösen.

Eine vorteilhafte Ausführungsform der Ausgestaltung der erfindungsgemäßen Vorrichtung ist darin zu sehen, dass zur Erzeugung der schwingungsmechanisch gekoppelten Befestigungseinheit eine stoffschlüssige Verbindung der Befestigungsschraube mit dem Gegenelement ausgestaltet ist. Stoffschlüssige Verbindungen werden alle Verbindungen genannt, bei denen die Verbindungspartner durch Kräfte auf atomarer oder molekularer Ebene zusammengehalten werden. Als Beispiele einer stoffschlüssigen Verbindung ist insbesondere eine Klebung, eine Verlötung oder eine Verschweißung zu nennen. Die Erzeugung der schwingungsmechanisch gekoppelten Befestigungseinheit kann beispielsweise durch einen teilweisen Verguss des Freiraums zwischen dem Schaft der Befestigungsschraube und der Nabe des Gegenelements mit einem schwingungskoppelnden Material, wie z.B. einem Metall ausgestaltet sein.

Eine sehr vorteilhafte Variante der erfindungsgemäßen Vorrichtung ist darin zu sehen, dass ein Gehäuse vorgesehen ist, in dem das Verbundschwingsystem mit einem Dämpfungsverguss eingegossen ist.

Eine weitere vorteilhafte Variante der erfindungsgemäßen Vorrichtung besteht darin, dass ein zwischen der Befestigungsschraube und dem Gegenelement und/oder dem piezoelektrischen Wandlerelement ausgebildete Freiraum zumindest teilweise mit einem Dämpfungsverguss vergossen ist.

Gemäß einer vorteilhaften Ausführungsform der erfindungsgemäßen Vorrichtung ist zumindest ein Anpasselement, das in Abstrahlrichtung der Ultra-/Schallsignale zwischen dem Verbundschwingsystem und dem Gehäuse angebracht ist, vorgesehen.

In einer Ausführungsform der Erfindung ist vorgesehen, dass das Gehäuse in Abstrahlrichtung der Ultra-/Schallsignale eine Membran aufweist.

Die Erfindung wird anhand der nachfolgenden Zeichnungen näher erläutert. Zur Vereinfachung sind in den Zeichnungen identische Teile mit dem gleichen Bezugszeichen versehen worden. Es zeigt:

Fig. 1 ein Blockschaltbild eines Ausführungsbeispiel der Vorrichtung zur Ermittlung des Füllstandes in einem Behälter,

Fig. 2 ein Ausführungsbeispiel der Sensoreinheit nach dem Stand der Technik,

Fig. 3 ein erstes Ausführungsbeispiel der erfindungsgemäßen Sensoreinheit,

Fig. 4 ein zweites Ausführungsbeispiel der erfindungsgemäßen Sensoreinheit.

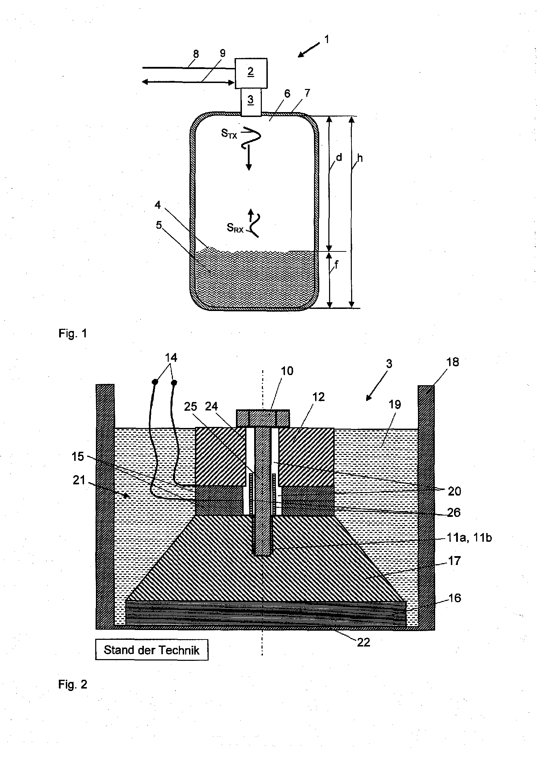

In Fig. 1 wird eine Vorrichtung 1 zur Ermittlung des Füllstandes f eines Füllguts 5 in einem Behälter 7 nach einer Laufzeitmessmethode von Ultra-/Schallsignalen S gezeigt. Die Vorrichtung 1 ist beispielsweise über einen Flansch an einem Stutzen bzw. Prozessanschluss am Behälter 7 befestigt, so dass sich die Sensoreinheit 3 bzw. der Ultraschall-Transciever, im Prozessraum 6 befindet während sich der Messumformer 2 mit der Sende-/Empfangseinheit, mit der Regel-/Auswerteeinheit und mit der Feldbuseinheit, die alle hier nicht explizit gezeigt sind, außerhalb des Prozessraums 6 befindet.

Im Allgemeinen wird in den folgenden Ausführungen primär nur der Messaufbau der Sensoreinheit 3 als ein kombiniertes Sende-/Empfangselement bzw. des Ultraschall-Transceivers zum Senden und Empfangen von Ultra-/Schallsignalen S näher betrachtet, jedoch ist auch eine getrennte Ausführungsform des Sendeelements und des Empfangselements als Sensoreinheit 3 denkbar. Der Ausdruck "Transceiver" entstand durch das Zusammenfassen der Bezeichnungen "Transmitter" (Sender) und "Receiver" (Empfänger) und ist ein allgemein gebräuchlicher Begriff in diesen technischen Gebieten. Der Antrieb des Ultraschall-Transceivers ist in der Regel als ein elektromechanisches Wandlerelement, das beispielsweise nach einem elektrostatischen, elektromagnetischen oder insbesondere nach einem piezoelektrischen Prinzip betrieben wird. Da das piezoelektrische Wandlerelement 15 zum Erzeugen und Messen von Ultraschallsignalen gegenüber den anderen Prinzipien einige Vorteile bietet, hat sich dieses piezoelektrische Wandlerprinzip als allgemeiner Standard durchgesetzt. Es sind jedoch alle elektromechanischen Wandlerprinzipien als Antriebsmechanismen in den folgenden erfindungsgemäßen Ausführungen anwendbar.

Im Messumformer 2 wird von der Sende-/Empfangseinheit ein Erregersignal erzeugt, das in der Sensoreinheit 3 ein Sendesignal S_{TX} bewirkt. Die Sensoreinheit 3 strahlt dieses Sendesignal S_{TX} in Richtung des Füllguts 5 in den Prozessraum 6 ab. Das an der Oberfläche 4 des Füllguts 5 reflektierte Reflexionssignal S_{RX} wird von der Sensoreinheit 3 wieder empfangen und in der Sende-/Empfangseinheit im Messumformer 2 signaltechnisch weiterverarbeitet. Die Regel-/Auswerteeinheit in dem Messumformer 2 wertet die Sendesignale S_{TX} und Reflexionssignale S_{RX} aus, indem beispielsweise eine zeit- oder distanzabhängige Echosignalkurve ermittelt wird, die einer weiteren signaltechnischen Verarbeitung und/oder Auswertung im Messumformer 2 zur Verfügung steht. Die Bezeichnung Ultra-/Schallsignale S fassen die Sendesignale S_{TX} und die Reflexionssignale S_{RX} unter einem Begriff zusammen. Die Regel-/Auswerteeinheit hat die Aufgabe, das empfangene, reflektierte Echo der Ultra-/Schallsignale S auszuwerten, indem die Reflexionssignale S_{RX} durch eine Signalverarbeitung und spezielle Signalauswertungsalgorithmen weiter verarbeitet werden, und daraus die Laufzeit bestimmt wird. Aus der Laufzeit der Ultra-/Schallsignale S lässt sich beispielsweise mit Kenntnis der Ausbreitungsgeschwindigkeit der Sendesignale S_{TX} und Reflexionssignale S_{RX} im Prozessraum 6 die Distanz d und somit bei Kenntnis der Höhe h eines Behälters 7 der Füllstand f eines Füllguts 5 bestimmen.

Über die Energieversorgungsleitung 8 wird die Vorrichtung 1 mit der benötigten Energie versorgt. Die Regel-/Auswerteeinheit kommuniziert über einen Feldbuseinheit und den Feldbus 9 mit einer entfernten Kontrollstelle und/oder mit weiteren Vorrichtungen, z.B. Feldgeräten, die nicht explizit gezeigt sind. Eine zusätzliche Energieversorgungsleitung 8 zur Energieversorgung des Vorrichtung 1 entfällt, wenn es sich bei der Vorrichtung 1 bzw. dem Messgerät um ein so genanntes Zweileiter-Messgerät handelt, dessen Kommunikation und Energieversorgung durch den Feldbus 9 ausschließlich und gleichzeitig über eine Zweidrahtleitung stattfindet. Die Datenübertragung bzw. Kommunikation über den Feldbus 9 erfolgt beispielsweise nach dem CAN-, HART-, PROFIBUS DP-, PROFIBUS FMS-, PROFIBUS PA-, oder FOUNDATION FIELDBUS- Standard.

In Fig. 2, Fig. 3 und Fig. 4 sind drei verschiedene Ausführungsbeispiele von Sensoreinheiten 3, die als Tonpilz-Resonatoren ausgestaltet sind, gezeigt.

In Fig. 2 ist ein Ausführungsbeispiel einer Sensoreinheit 3 zum Aussenden und/oder Empfangen von Schall oder Ultraschall nach dem Stand der Technik dargestellt. Diese Sensoreinheit 3 ist als ein so genannter Tonpilz-Resonator ausgebildet, der im Allgemeinen aus einem Gegenelement 12, einem Abstrahlelement 17 und einem zwischen dem Gegenelement 12 und dem Abstrahlelement 17 eingespannten zylindrischen, piezoelektrischen Wandlerelement 15 aufgebaut ist.

Das Kernstück des Resonators ist ein piezoelektrisches Wandlerelement 15, das mittels einer Befestigungsschraube 10 zwischen einem Abstrahlelement 17 und einem Gegenelement 12 eingespannt wird, wodurch ein Verbundschwingsystem 21 ausgebildet ist. Ein solches Verbundschwingsystem ist beispielsweise in der Publikation von Charles Desilets et al, "Analyses and Measurements of acoustically matched, air-coupled Tonpilz Transducers" (1999 IEEE Ultrasonic symposium proceedings) näher beschrieben.

Wird eine impulsförmige oder periodische elektrische Spannung, wie z.B. eine Sinus- oder Rechteck-Spannung an das piezoelektrische Wandlerelement 15 des Verbundschwingsystems 21 über die elektrischen Anschlüsse 14 angelegt, so reagiert dieses je nach Vorzeichen der angelegten Spannung darauf mit einer Kontraktion oder Expansion des piezoelektrischen Wandlerelements 15 in axialer Richtung. Durch diese Kontraktion bzw. Expansion wird der Verbundschwinger zu Longitudinalschwingungen angeregt. Diese Anregung ist besonders effizient, wenn die Frequenz der elektrischen Anregung mit der Resonanzfrequenz des Schwingers über einstimmt. Typische Resonanzfrequenzen solcher Ultraschall-Trasducer betragen etwa 5-200kHz. Im Allgemeinen verändert sich die Resonanzfrequenz mit der Temperatur und anderen äußeren Einflüssen. Anstelle einer periodischen Anregung genügt auch ein einzelner elektrischer Impuls, um die Schwingungen anzuregen. Das Abstrahlelement 17 ist so konzipiert, dass sich seine Schwingungsbewegungen einseitig als Ultra-/Schallsignale S in dem Prozessraum 6 fortpflanzen.

Treffen umgekehrt Schallwellen mit der Resonanzfrequenz des Schwingers auf das Abstrahlelement 17, so wird auch dadurch der Resonator zum Schwingen angeregt. Infolgedessen werden die piezoelektrischen Wandlerelemente periodisch leicht zusammengedrückt und wieder auseinander gezogen, wodurch an ihren Elektroden eine kleine elektrische Wechselspannung entsteht.

Der Ultraschall-Transceiver wird so angesteuert, dass er möglichst kurze Sendesignale S_{TX} aussendet und die Reflexionssignale S_{RX} mit demselben piezoelektrischen Wandlerelement 15 empfängt. Diese Ultra-/Schallsignale S werden in eine zeit- oder distanzabhängige Echosignalkurve umgewandelt, die wiederum einer weiteren signaltechnischen Verarbeitung und/oder Auswertung im Messumformer 2 zur Verfügung steht. Nachdem das piezoelektrische Wandlerelement 15 beim Sendevorgang zu Schwingungen angeregt worden ist, schwingt das Verbundschwingsystem 21 aus. Innerhalb der Zeit, die das Verbundschwingsystem 21 zum Ausschwingen benötigt, können eintreffende Echos nicht eindeutig in Echosignale umgewandelt und ausgewertet werden. Man nennt diese Zeit auch Blockdistanz, da in dieser Zeit die Messung durch das Ausschwingen des Verbundschwingsystems 21 blockiert ist. Entsprechend ist man bemüht, die Zeit, die das Verbundschwingsystem 21 nach erfolgter Anregung zum Ausschwingen benötigt, möglichst kurz zu halten. Dies geschieht üblicherweise durch eine mechanische Dämpfung, z.B. mittels einem einige Teile des Verbundschwingsystems 21 umgebenden Dämpfungsverguss 19. Je stärker die mechanische Dämpfung durch diesen Dämpfungsverguss 19 ist, umso schneller klingt die angeregte Schwingung des Verbundschwingsystems 21 ab. Dies ist besonders bei Füllstandsmessgeräten, die für kleine Distanzen d ausgelegt sind, sehr wichtig. Eine große mechanische Dämpfung bewirkt aber nicht nur ein schnelles Ausschwingen des piezoelektrischen Wandlerelementes 15, es reduziert auch die Messempfindlichkeit der Sensoreinheit 3. Echos bzw. Reflexionssignale S_{RX} mit geringer Schallleistung können von stark gedämpften piezoelektrischen Wandlerelementen 15 nicht aufgezeichnet und in Echosignalkurven umgeformt werden.

Das piezoelektrische Wandlerelement 15 besteht in einer einfachen Ausführung beispielsweise aus zwei übereinander angeordneten, ringscheibenförmigen Elementen, die in axialer Richtung eine zueinander entgegen gesetzter Polarisation aufweisen. Zwischen den beiden Elementen ist eine gemeinsame ringscheibenförmige Mittenelektrode angeordnet. Auf der Außenseite der ringscheibenförmigen Elemente ist jeweils eine weitere ebenfalls ringscheibenförmige Gegenelektrode aufgebracht. Die Mittenelektrode und die beiden Gegenelektroden sind über die elektrischen Anschlüsse 14 mit der Sende-/Empfangseinheit im Messumformer 2 elektrisch verbunden. Dabei liegen die Gegenelektroden über die metallisch leitende Befestigungsschraube 10 auf gleichem Potential, wodurch nur eine Kontaktierung der Gegenelektroden mit einem elektrischen Anschluss 14 notwendig ist. Zwischen den Anschlüssen 14 der Mittenelektrode und der Gegenelektroden wird eine Erregerspannung angelegt. Die Funktion des piezomechanischer Wandlerelements 15 beruht, wie schon zu vor erwähnt, auf der Deformation piezokeramischer Materialien, wie z.B. Blei-Zirkonat-Titanat (PZT) unter Einwirkung elektrischer Felder. Dieser Effekt wird im Allgemeinen als reziproker piezoelektrischer Effekt bezeichnet. Legt man an das gepolte piezomechanische Wandlerelement 15 eine Spannung in Polungsrichtung, so erfährt dieses eine Ausdehnung in axialer Richtung und senkrecht dazu eine Kontraktion. Das piezoelektrische Wandlerelement 15 führt gerichtete Dickenänderungen in axialer Richtung aus und regt infolgedessen das gesamte Verbundschwingsystem 21 zu Axialschwingungen an.

An die entgegen der Abstrahlrichtung befindliche Stirnfläche des piezoelektrischen Wandlerelements 15 grenzt das Gegenelement 12 an, das als Kreiszylinder mit einer zentralen, axialen, durchgehenden Nabe 24 bzw. Innenbohrung ausgebildet ist. Das Gegenelement 12 besteht aus einem Material hoher Dichte, z. B. Stahl, wodurch eine Reduktion der Schallenergie bzw. Ultra-/Schallsignale S, die entgegen der Abstrahlrichtung des Abstrahlelements 17 in Richtung des Gegenelement 12 abgestrahlt wird bzw. werden, erreicht wird.

An die in Abstrahlrichtung befindliche Stirnfläche grenzt hingegen das Abstrahlelement 17 an. Das Abstrahlelement 17 ist beispielsweise als ein kegelstumpfförmiges Bauelement aus einem leichten Material, z.B. Aluminium ausgebildet. Diejenige Kreisfläche des Kegelstumpfs des Abstrahlelementes 17, die den größeren Durchmesser aufweist, ist dabei vom piezoelektrischen Wandlerelement 15 abgewandt und bildet eine ebene Frontfläche. Das Abstrahlelement 17 weist auf der dem piezoelektrischen Wandlerelement 15 zugewandten Seite eine zentrale axiale Sackloch-Bohrung mit einem Innengewinde 11a auf.

Weiterhin ist eine Befestigungseinheit 13 vorgesehen, durch die das piezoelektrische Wandlerelement 15 in axialer Richtung zwischen dem Gegenelement 12 und dem Abstrahlelement 17 kompressibel eingespannt ist. Hierdurch wird ein Kompressionsverbundschwingsystem erzeugt. Im gezeigten Ausführungsbeispiel ist die Befestigungseinheit 13 als Befestigungsschraube 10 ausgeführt, die in das Innengewinde 11a der Sacklochbohrung des Abstrahlelements 17 eingebracht ist. Die Befestigungsschraube 10 durchdringt hierbei vollständig das piezoelektrische Wandlerelement 15 und das Gegenelement 12 und verspannt alles zu einem Verbundschwingsystem 21.

Das Verbundschwingsystem 21 ist im dargestellten Fall in einem zylindrischen topfförmigen Gehäuse 18 aus beispielsweise Polypropylen angeordnet, wobei die zwischen dem Gehäuse 18 und dem Schall- oder Ultraschallsensor bestehenden Hohlräume mit einem elektrisch nicht leitenden Dämpfungsverguss 19 ausgefüllt sind. Bei einer Sensoreinheit 3 bzw. bei einem Ultraschallsensor, die bzw. der nicht nur als Sender, sondern auch als Empfänger genutzt wird, ist es wichtig, dass eine einmal angeregte Schwingung schnell wieder abklingt. Erst nach einem nahezu vollständigen Abklingen der im piezoelektrischen Wandlerelement 15 entstandenen Schwingung des Sendesignals S_{TX} ist die Sensoreinheit 3 wieder empfangsbereit. Um ein schnelles Abklingen des Sendesignals S_{TX} zu erzielen, ist, wie schon zuvor erwähnt, in dem Gehäuse 18 vorzugsweise ein Dämpfungsverguss 19 vorgesehen. Der Dämpfungsverguss 19 hat einerseits die Aufgabe, das Abklingverhalten des Verbundschwingsystems 21 zu optimieren und anderseits eine Diffusionssperre für Flüssigkeiten und Gase zu bewirken. Insbesondere handelt es sich bei dem Dämpfungsverguss 19 um ein Silikongel, in das beispielsweise Keramikteilchen, Glashohlkugeln und/oder Gasblasen eingebettet sind, wodurch mittels einer Verringerung der Dichte des Dämpfungsverguss 19 ein verbessertes Dämpfungsverhalten des Verbundschwingsystem 21 erreicht wird.

Da sich die akustische Impedanzen des Füllguts, in das die Ultra-/Schallsignale S gesendet werden, z.B. Luft, und die des piezoelektrischen Wandlerelements 15 sehr stark unterscheiden, ist zwischen dem Abstrahlelement 17 und dem Boden bzw. der Membran 22 des Gehäuses 18 vorzugsweise ein Anpasselement 16 aus einem Kunststoff, z.B. ein Epoxydharz, mit mittlerer akustischer Impedanz angeordnet. Um eine möglichst gute Anpassung und damit einen möglichst hohen Schalldruck zu erzielen, weist das Anpasselement 16 bzw. die Anpassschicht vorzugsweise eine Stärke von einem Viertel der Wellenlänge der erzeugten Ultra-/Schallsignale S auf.

Zur elektrischen Isolation des Schafts 25 der Befestigungsschraube 10 von dem piezoelektrischen Wandlerelement 15 und der Mittenelektrode ist in den Hohlraum 20 eine locker sitzende Hülse 26, z.B. aus Teflon eingebracht. Die Teflon-Hülse 26 ist meist nur so hoch wie die Höhe der piezoelektrischen Wandlerelemente 15 ausgebildet, jedoch kann diese Hülse 26 sich auch über die Länge des gesamten Schafts 25 der Befestigungsschraube 10 erstrecken.

Da der Schaft 25 der Befestigungsschraube 10 eine bestimmte Bewegungsfreiheit im Freiraum 20 der Nabe 24 des Gegenelements 12 und in dem ringförmigen piezo-elektrischen Wandlerelement 15 hat, kann dieser Schaft 25 der Befestigungsschraube 10 selbst eine Schwingung mit einer bestimmten Resonanzfrequenz ausführen. Wegen der mechanischen Verbindung zwischen den Teilen kann es sein, dass der Sendeimpuls nicht nur das Verbundschwingsystem 21 als ganzes, sondern zusätzlich auch den Schaft 25 der Befestigungsschraube 10 zu Schwingungen anregt. Umgekehrt erzeugt dann das Ausschwingen des Schaftes 25 der Befestigungsschraube 10 im Empfangsfall ein zusätzliches Empfangssignal, das sich zu dem Signal vom Ausschwingen des ganzen Verbundschwingsystems 21 addiert. Im Allgemeinen wird das Störsignal von der Schwingung der Befestigungsschraube 10 viel schwächer sein als das vom Ausschwingen des ganzen Verbundschwingsystems 21. Da die Befestigungsschraube 10 jedoch im Gegensatz zum Verbundschwingsystem 21 nicht durch den Dämpfungsverguss mechanisch bedämpft wird, dauert das Ausschwingen der der Befestigungsschraube 10 länger als das des ganzen Verbundschwingsystems 21. Es ist daher möglich, dass das Signal von der Befestigungsschraube 10 noch am Empfängereingang sichtbar ist, wenn das Signal vom Verbundschwingsystem 21 längst abgeklungen ist. Solange das Störsignal von der Schwingung der Befestigungsschraube 10 aber noch vorhanden ist, verhindert es den Empfang schwacher Echosignale.

Je näher die Eigenschwingung bzw. die Resonanzfrequenz der Befestigungsschraube 10 bei der Arbeitsfrequenz des Verbundschwingsystems 21 liegt, umso stärker kann die Schwingung der Befestigungsschraube 10 durch den Sendeimpuls mit angeregt werden. Ein besonderer Nebeneffekt ist, dass eine Abschwächung des Signals vom Ausschwingen der Befestigungsschraube 10 durch nachgeschaltete Filtersysteme am Empfängereingang, die auf die Arbeitsfrequenz abgestimmt sind, nicht auftritt.

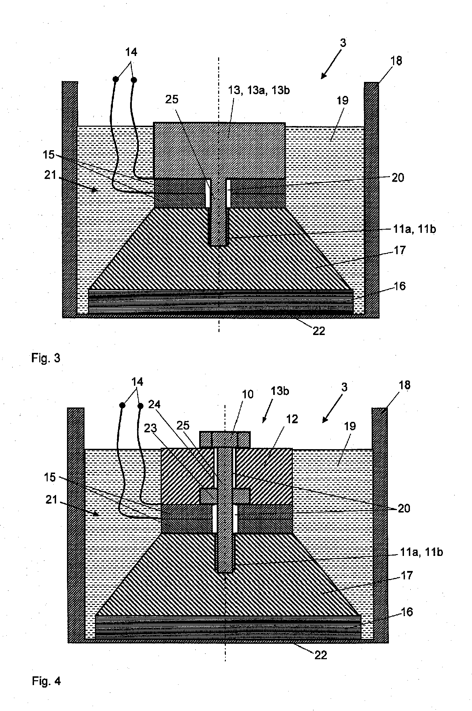

In Fig. 3 wird ein erfindungsgemäßes Ausführungsbeispiel gezeigt, bei dem das Gegenelement 12 und die Befestigungsschraube 10 als eine einteilige Befestigungseinheit 13a ausgebildet sind. Aufgrund der einteiligen Ausgestaltung der Befestigungseinheit 13 ist die Länge des Schafts 25 verändert worden. Der Schaft 25 der einteiligen Befestigungseinheit 13a weist nur noch die freibewegliche Länge von der Stärke des piezoelektrischen Wandlerelementes 15 auf, wodurch die Störresonanzfrequenzen der Eigenschwingung bzw. der Biegeschwingung des Schafts 25 der einteiligen Befestigungseinheit 13a außerhalb der Arbeitsfrequenzbereich der Signalfilter der Sende-/Empfangseinheit liegen. Durch die Verschiebung der Störresonanzfrequenzen der Biegeschwingung des Schafts 25 aus dem Arbeitsfrequenzbereich der Sende-/Empfangseinheit stören diese das Messsignal zur Auswertung der Laufzeit nicht mehr.

Das Gegenelement 12, das als Schraubenkopf am Schaft 25 der Befestigungsschraube 10 ausgebildet ist, weist zur Montage und Verspannung des Verbundschwingsystems 21 beispielsweise einen Innen-/Außensechskant-Flächen als Montagemittel auf. Es sind jedoch auch andere Montagemittel wie z.B. Kreuz-/Schlitz, Torx verwendbar. Mit einem entsprechenden Werkzeug, das am entsprechenden Montagemittel angreift, wird das Verbundschwingsystem 21 montiert und vorgespannt.

Möglich ist weiterhin, dass das Gegenelement 12 und die Befestigungsschraube 10 als eine schwingungsmechanische gekoppelte Befestigungseinheit 13b ausgebildet sind.

Zur Erzeugung der schwingungsmechanischen Kopplung zwischen dem Gegenelement 12 und der Befestigungsschraube 10 ist zwischen diesen beiden Einzelelementen eine kraftschlüssige Verbindung ausgeführt. Diese Verbindungsart kann beispielsweise durch eine Presspassung des Schafts 25 der Befestigungsschraube 10 in der Nabe 24 des Gegenelements 12 erfolgen.

Die schwingungsmechanische Kopplung zwischen dem Gegenelement 12 und der Befestigungsschraube 10 kann auch durch eine stoffschlüssige Verbindung ausgeführt sein. Bei dieser Verbindungsart wird beispielsweise durch eine Klebung, Verschweißung oder Verlötung des Schafts 25 der Befestigungsschraube 10 mit der Nabe 24 des Gegenelements 12 eine dauerhafte, mechanisch feste Verbindung geschaffen. Ein weitere Möglichkeit, eine schwingungsmechanisch koppelnde Verbindung zwischen dem Gegenelement 12 und der Befestigungsschraube 10 herzustellen, besteht darin den Hohlraum 20 zwischen dem Schaft 25 der Befestigungsschraube 10 und der Nabe 24 des Gegenelements 12 im montierten Zustand durch einen entsprechenden Verguss miteinander zu verbinden. Als Material für diesen Verguss kann beispielsweise ein Metall verwendet werden, da dieses gute schwingungsmechanische Kopplungseigenschaften und gute Haftungseigenschaften zu den beiden Verbindungselemente hat.

In Fig. 4 wird ein weiteres erfindungsgemäßes Ausführungsbeispiel gezeigt, bei dem das Gegenelement 12 und die Befestigungsschraube 10 als eine schwingungsmechanisch gekoppelte Befestigungseinheit 13b mit einer Mischform aus einer kraftschlüssigen und formschlüssigen Verbindungstechnik gezeigt sind. Die schwingungsmechanisch gekoppelte Befestigungseinheit 13b ist aus einem Gegenelement 12, einer Befestigungsschraube 10 und einem Konterelement 23 aufgebaut. Das Konterelement 23 ist in die die Stirnfläche des piezoelektrischen Wandlerelements 15 berührende Fläche des Gegenelements 12 formschlüssig eingelassen. Der durch die Nabe 24 des Gegenelements 12 geführte Schaft 25 der Befestigungsschraube 10 wird von dem Konterelement 23 auf Position gehalten. Bei dem Konterelement 23 handelt es sich beispielsweise um eine gewöhnliche Schraubenmutter mit dem gleichen Innengewinde 11a, das im Abstrahlelement 17 eingebracht ist. Die Befestigungsschraube 10 wird durch die Nabe 24 hindurch in das Konterelement 23 bzw. die Schraubenmutter eingedreht, bis ein gewisses Drehmoment erreicht ist. Durch diesen Aufbau entsteht zwischen dem Schraubenkopf der Befestigungsschraube 10 und dem Konterelement 23 über den Schaft 25 eine bestimmte Zugkraft. Mittels dieser definierten Zugkraft ist das Gegenelement 12 kraftschlüssig mit der Befestigungsschraube 10 verbunden und schwingungsmechanisch gekoppelt.

Die Montage aller in den Ausführungsbeispielen vorgestellten einteiligen und schwingungsmechanisch gekoppelten Befestigungseinheiten 13a, 13b erfolgt nach dem folgenden Verfahren: Der Schaft 25 der Befestigungseinheit 13 mit einem Gewinde 11 b wird durch das Mittenloch des ringförmigen piezoelektrischen Wandlerelements 15 hindurch in das Innengewinde 11a des Abstrahlelements 17 eingeschraubt. Über die elektrischen Anschlüsse 14 wird die Spannung, die durch Verformung des piezoelektrischen Wandlerelements 15 aufgrund der Krafteinwirkung entsteht, gemessen und überwacht. Diese Spannung ist proportional zur Kraft, die auf das piezoelektrische Wandlerelement 15 ausgeübt wird. Dadurch kann die statische mechanische Vorspannung des Verbundschwingsystems 21 genau bestimmt werden.**Bezugszeichenliste**
1. erfindungsgemäße Vorrichtung
2. Messumformer
3. Sensoreinheit
4. Oberfläche
5. Füllgut
6. Prozessraum
7. Behälter
8. Energieversorgungsleitung
9. Feldbus
10. Befestigungsschraube

11a Innengewinde

11b einteilige Befestigungseinheit
1. Gegenelement
2. Befestigungseinheit

13a einteilige Befestigungseinheit

13b schwingungsmechanisch gekoppelte Befestigungseinheit
1. elektrische Anschlüsse
2. piezoelektrisches Wandlerelement
3. Anpasselement
4. Abstrahlelement
5. Gehäuse
6. Dämpfungsverguss
7. Freiraum
8. Verbundschwingsystem
9. Membran
10. Konterelement
11. Nabe
12. Schaft
13. Hülse

S Ultra-/Schallsignal

S_{TX} Sendesignal

S_{RX} Reflexionssignal

d Distanz

f Füllstand

h Höhe

## Patentansprüche

1. Vorrichtung (1) zur Ermittlung und Überwachung des Füllstands (f) eines Füllguts (5) in einem Behälter (7) gemäß der Laufzeitmessmethode mit Ultra-/Schallsignalen (S) in einem definierten Frequenzbereich, bestehend aus einem Messumformer (2) und einer Sensoreinheit (3), wobei die Sensoreinheit (3) aus zumindest einem piezoelektrischen Wandlerelement (15) , das stirnseitig von zumindest einem Abstrahlelement (17) und zumindest einem Gegenelement (12) begrenzt ist, besteht, wobei zumindest eine Befestigungsschraube (10) das Gegenelement (12), das Abstrahlelement (17) und das piezoelektrischen Wandlerelement (15) zu einem Verbundschwingsystem (21) positioniert, das die Ultra-/Schallsignale (S) aussendet und/oder empfängt, **dadurch gekennzeichnet, dass** die Befestigungsschraube (10) und das Gegenelement (12) als eine Befestigungseinheit (13) ausgebildet und so ausgestaltet sind, dass auftretende Störresonanzfrequenzen der Befestigungseinheit (13) außerhalb des Frequenzbereichs der Ultra-/Schallsignale (S) liegen.

2. Vorrichtung nach Anspruch 1, **dadurch gekennzeichnet, dass** die Befestigungsschraube (10) und das Gegenelement (12) als eine einteilige Befestigungseinheit (13a) ausgestaltet sind.

3. Vorrichtung nach Anspruch 1, **dadurch gekennzeichnet, dass** die Befestigungsschraube (10) und das Gegenelement (12) als eine zumindest zweiteilige, schwingungsmechanisch gekoppelte Befestigungseinheit (13b) ausgestaltet sind.

4. Vorrichtung nach Anspruch 3, **dadurch gekennzeichnet, dass** zur Erzeugung der schwingungsmechanisch gekoppelten Befestigungseinheit (13b) eine kraftschlüssige Verbindung zwischen der Befestigungsschraube (10) und dem Gegenelement (12) ausgestaltet ist.

5. Vorrichtung nach Anspruch 3 oder 4, **dadurch gekennzeichnet, dass** zur Erzeugung der schwingungsmechanisch gekoppelten Befestigungseinheit (13b) eine formschlüssige Verbindung vorgesehen ist, die das Gegenelement (12) mit der Befestigungsschraube (10) schwingungsmechanisch fest verbindet.

6. Vorrichtung nach Anspruch 3, 4 oder 5, **dadurch gekennzeichnet, dass** zur Erzeugung der schwingungsmechanisch gekoppelten Befestigungseinheit (13b) eine stoffschlüssige Verbindung der Befestigungsschraube (10) mit dem Gegenelement (12) ausgestaltet ist.

7. Vorrichtung nach Anspruch 1, **dadurch gekennzeichnet, dass** ein Gehäuse (18) vorgesehen ist, in dem das Verbundschwingsystem (21) mit einem Dämpfungsverguss (19) eingegossen ist.

8. Vorrichtung nach Anspruch 1, **dadurch gekennzeichnet, dass** ein zwischen der Befestigungsschraube (10) und dem Gegenelement (12) und/oder dem piezoelektrischen Wandlerelement (15) ausgebildeter Freiraum (20) zumindest teilweise mit einem Dämpfungsverguss (19) vergossen ist.

9. Vorrichtung nach Anspruch 7 oder 8, **dadurch gekennzeichnet, dass** zumindest ein Anpasselement (16) vorgesehen ist, das in Abstrahlrichtung der Ultra-/Schallsignale (S) zwischen dem Verbundschwingsystem (21) und dem Gehäuse (18) angebracht ist.

10. Vorrichtung nach Anspruch 7 oder 8, **dadurch gekennzeichnet, dass** das Gehäuse (18) in Abstrahlrichtung der Ultra-/Schallsignale eine Membran (22) aufweist.
